# EUROPEAN PATENT APPLICATION

(11) **EP 4 686 438 A1**
(43) Date of publication of application: **04.02.2026**
(21) Application number: 25191921.3
(22) Date of filing: 25.07.2025
(51) Int. Cl.: A47J 31/46, A47J 31/52

(54) **METHOD AND MACHINE FOR SIMULTANEOUS DISPENSING OF A PAIR OF HOT BEVERAGES**

(30) Priority: 01.08.2024 IT 202400017989
(71) Applicant: Cimbali Group S.p.A., 20082 Binasco (MI) (IT)
(72) Inventor: Dameno, Marco, 20082 Binasco MI (IT); Larva, Luigi, 20082 Binasco MI (IT)
(74) Representative: Perani & Partners S.p.A.

(57) **Abstract**

Method for simultaneous dispensing of a first hot beverage at a first temperature (T1) and a second hot beverage at a second temperature (T2) less than or equal to the first temperature (T1), by means of a machine (100) for dispensing hot beverages comprising:
- a heating device (1) provided with a heating chamber (2) and heating elements (3) configured to provide heat in the heating chamber (2);
- a first hydraulic line (102) having a first heating section (102a) passing through the heating chamber (2) and a first pump (P1);
- a second hydraulic line (103) having a second heating section (103a) passing through the heating chamber (2) and a second pump (P2);
said method comprising the steps of:
A) controlling the operation of the heating elements (3) to provide a thermal power in the heating chamber (2) such as to bring a first fluid flow (F1) when passing through the first heating section (102a) with a first flow rate value (Q1) to the first temperature (T1);
B) controlling the operation of the first pump (P1) to generate the first fluid flow (F1) having the first flow rate value (Q1) in the first hydraulic line (102),
C) at the same time as step B), controlling the second pump (P2) to generate a second flow (F2) in the second hydraulic line (103),
D) adjusting the flow rate of the second fluid flow (F2) to assume a second flow rate value (Q2) such that the second fluid flow (F2) is brought to the second temperature (T2) by passing through the second heating section (103a).

## Description

### Technical Field

The present invention relates to a method for simultaneous dispensing of a pair of hot beverages by means of a machine such as, for example, a traditional or super-automatic coffee machine.

The present invention also refers to a machine configured to dispense at least two hot beverages simultaneously, which is useful for use in bars, restaurants, canteens and similar public or private establishments.

### State of the art

In the sector of the production of hot beverages, there is an increasing demand for plant-based beverages (e.g. soy, rice, almond and oat milk) as an alternative to traditional animal milk, both for reasons of digestibility and ethical choices or simply for the search for healthier and more sustainable alternatives.

There is therefore a need for operators in the sector to have available equipment capable of independently treating traditional milk of animal origin and such vegetable beverages.

In general, the operators in the sector feel the need to be able to use machines for the preparation of hot beverages capable of heating, even simultaneously, two distinct fluids without them mixing and contaminating each other.

To meet these needs, machines with two distinct hydraulic circuits working in parallel, each having a respective heating device have been developed. An example of such machines is described in document US6192785B1.

Such machines, although they allow to dispense two distinct hot beverages, are particularly bulky, complex, and expensive, as they require the duplication of the hydraulic circuits and related elements.

The two hydraulic circuits work independently from each other and are therefore individually controlled, thus duplicating the operating commands of the heating devices.

### Object of the invention

In this context, the technical task underlying the present invention is to propose a method and a machine for simultaneous dispensing of two hot beverages that overcome the drawbacks of the prior art mentioned above.

In particular, it is an object of the present invention to make available a method for simultaneous dispensing of two hot beverages, obtained from respective separately heat-treated fluid flows, implementable by compact machines for the dispensing of hot beverages of simple and economical construction.

It is also an object of the present invention to make available a machine for the dispensing of hot beverages able to treat simultaneously and separately two distinct fluid flows which is compact, simple and economical.

### SUMMARY OF THE INVENTION

The technical task mentioned and the objects stated are essentially achieved by a method and a machine for simultaneous dispensing of two hot beverages in accordance with the present invention.

In particular, the present invention proposes to provide a method for simultaneous dispensing of a first and a second hot beverage through a machine comprising a first and a second hydraulic line having respective heating sections arranged in a single heating chamber. Within the latter, a first and a second fluid flow, which flow in respective heating sections, heat up increasing their temperature up to the dispensing temperature.

The method that is the subject-matter of the present invention provides first of all to provide a thermal power in the heating chamber such as to bring the first fluid flow having a first flow rate value to the dispensing temperature of the first hot beverage, and to generate such first flow by means of an actuation command of a first pump of the first hydraulic line.

Simultaneously with the actuation of the first pump, the method provides for controlling the actuation of a second pump to generate a second flow in the second hydraulic line and adjusting its flow rate so that it reaches the dispensing temperature of the second beverage by passing through the heating chamber in the respective heating section.

It should be noted that the method subject-matter of the present invention allows the simultaneous dispensing of two separately treated hot beverages, in a compact machine of simple and economical construction. This method can in fact be carried out in a machine provided with a single heating chamber for both hydraulic lines which, therefore, is more compact, simple and economical than those known in the state of the art.

The present invention also makes available a machine for simultaneous dispensing of hot beverages which, by having a single heating chamber for both hydraulic lines from which respective hot beverages are dispensed, is able to treat two distinct fluid flows separately and is compact, simple and economical.

The present invention also allows to make available a method and a machine for dispensing thermally treated hot beverages not only separately but also customized, so as to be able to maximize the aromatic yield and the organoleptic properties.

### LIST OF FIGURES

Further features and advantages of the present invention will become clearer from the indicative, and therefore non-limiting, description of a machine and a method for dispensing hot beverages as illustrated in the appended drawings, in which:
- Figure 1a shows a schematic representation of a first embodiment of a machine for dispensing hot beverages according to the present invention;
- Figure 1b shows an enlargement of some components of the machine of Figure 1a;
- Figure 2a shows a schematic representation of a second embodiment of the machine for dispensing hot beverages according to the present invention;
- Figure 2b shows an enlargement of some components of the machine of Figure 2a;
- Figure 3 shows a component of the machine shown in figures 1a and 2a partially in section to show its internal characteristics;
- Figure 4 shows a detail of the component of Figure 3 partially in section to better show its internal characteristics;
- Figure 5a shows a lateral sectional view of the component of Figure 3;
- Figure 5b shows an enlargement of a first detail of Figure 5a;
- Figure 5c shows an enlargement of a second detail of Figure 5a
- Figure 6a shows a perspective view of some features of the component of Figure 3;
- Figure 6b shows an exploded perspective view of the features of Figure 6a;

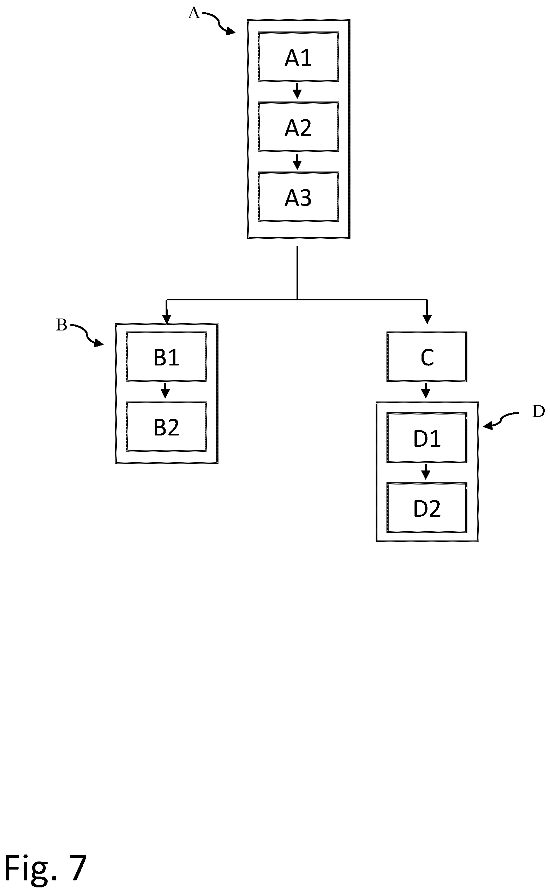

- Figure 7 shows a block diagram of the method for simultaneous dispensing of hot beverages according to the present invention;

### DETAILED DESCRIPTION

The present invention relates to a method for simultaneous dispensing of hot beverages by means of a machine 100 such as, for example, a traditional or super-automatic coffee machine.

In the context of the present invention, *"hot beverages"* are intended to mean all those beverages dispensed/prepared/served at a temperature higher than room temperature such as, for example, hot milk (frothed or not), chocolate, tea, herbal teas and infusions in general. In particular, according to one aspect, in the context of the present invention *"hot beverages"* are to be considered all those beverages that are dispensed/prepared/served at temperatures above 40°C.

Therefore, in the context of the present invention, hot beverages are both beverages obtained directly by heating a fluid (e.g. hot milk) and those derived from a heated fluid, for example, by infusion processes (e.g. tea and herbal teas).

It should be noted that in the context of the present document, the term *"fluid"* is intended to indicate both liquids such as, for example, milk, water, tea, and infusions and liquid/air mixtures such as, for example, frothed milk.

In particular, the method subject-matter of the present invention allows the simultaneous dispensing of at least one first hot beverage at a first temperature T1 obtained by heating a first fluid flow F1, and of a second hot beverage at a second temperature T2 - less than or equal to the first hot temperature T1 - obtained by heating a second fluid flow F2.

First and second hot beverages may be the same or different. Obviously, if the first and second hot beverages are the same, the first and second fluid flows F1, F2 will be made with the same fluid; conversely, if the first and second hot beverages are different, the first and second fluid flows F1, F2 will be made with different fluids.

Preferably, the first and second beverages are different and, in particular, the first fluid flow F1 is made with milk of animal origin, while the second fluid flow F2 is made with a vegetable beverage such as, for example, soy, an infusion, or simply water.

The method that is the subject-matter of the present invention is carried out by means of the machine 100 for dispensing hot beverages, which is also the subject-matter of the present invention.

For simplicity of explanation, in the following, we will first describe the characteristics of the machine 100 and then move on to the method.

The machine 100 subject-matter of the present invention is configured to simultaneously dispense at least two hot beverages, both at the same and different temperatures, obtained by thermally treating the first fluid flow F1 to bring it to the first dispensing temperature T1 of the first beverage and the second fluid flow F2 to bring it to the second dispensing temperature T2 of the second beverage.

It should be specified that the machine 100 does not necessarily dispense the first and second beverages simultaneously, but can also be configured to dispense them individually.

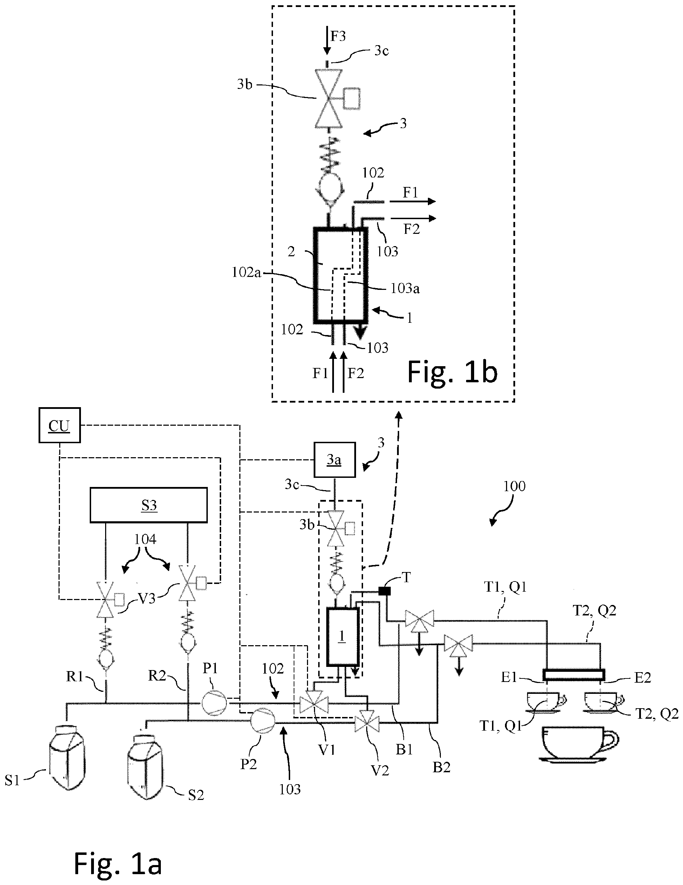

With reference to figures 1a and 1b, the machine 100 comprises the heating device 1 configured to heat the first and second fluid flows F1, F2 separately, i.e. without these coming into direct contact and contaminating each other.

The heating device 1 preferably performs continuous heating of fluids, i.e. it heats the first and second fluid flows F1, F2 while they are flowing in what will hereinafter be defined as the first and second heating sections 102a, 103a.

As shown in figures 1b and 1c, the heating device is provided with a heating chamber 2 within which heat exchange phenomena take place aimed at increasing the temperature of the first and second fluid flows F1, F2.

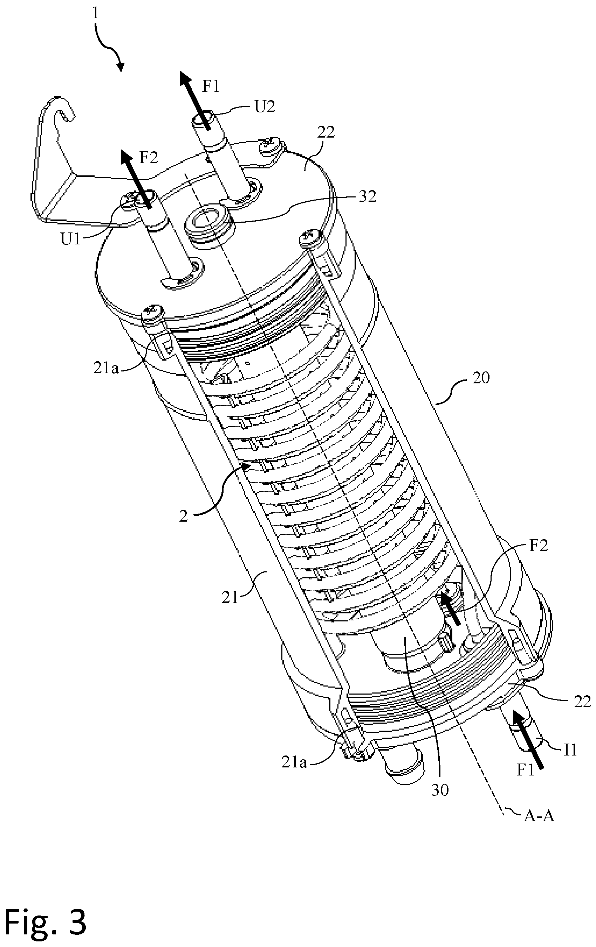

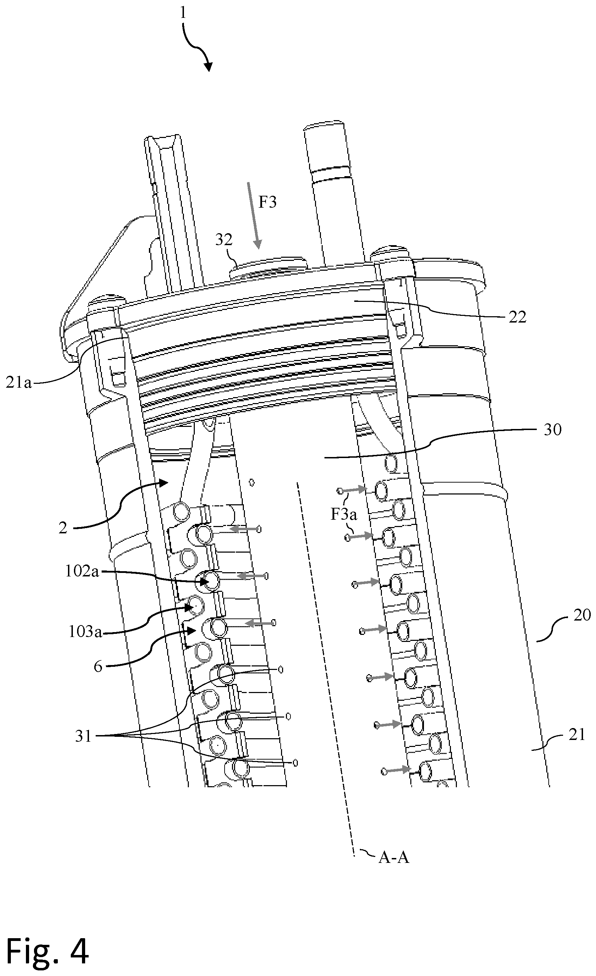

In the embodiment shown in figures 3 and 4, the heating chamber 2 is defined by a hollow main body 20 which, preferably, has an axial-symmetrical conformation extending around an axial direction A-A.

According to one aspect, the main body 2 comprises a hollow tubular body 21 extending along the axial direction A-A between two opposite open ends 21a, and two closure caps 22 removably mounted on a respective end 21a of the hollow tubular body 21.

The heating device 1 is also provided with heating elements 3 configured to supply heat, in particular thermal power, to the heating chamber 2.

According to one aspect, the heating elements 3 are configured to supply a heating flow F3 into the heating chamber 2, for example by means of a supply duct 30 extending into the heating chamber 2 along the axial direction A-A.

In the embodiment shown in figures 3 and 4, the supply duct 30 extends mainly along the axial direction A-A and is arranged coaxially to the main body 2.

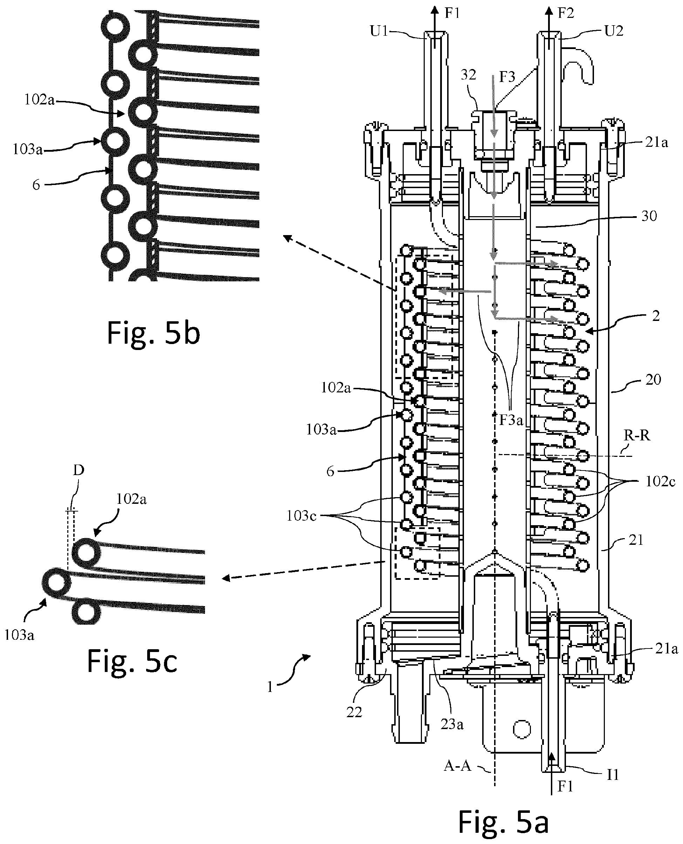

According to an aspect shown in figures 4 and 5a, the supply duct 30 is provided with a plurality of supply openings 31 distributed, preferably homogeneously, along and around the axial direction A-A. Such distribution of the holes allows to equally distribute the heat supplied through the heating flow in the heating chamber 20, thus guaranteeing thermal stability to the heating device 1.

As shown in figures 4 and 5a, in use, the supply duct 30 supplies in the heating chamber 2 the heating flow F3 radially to the axial direction A-A through the supply openings 31. That is, in use, the heating flow F3 flowing within the supply duct 30 along the axial direction A-A branches into a plurality of heating jets F3a that leave it radially in the axial direction A-A through respective supply openings 31.

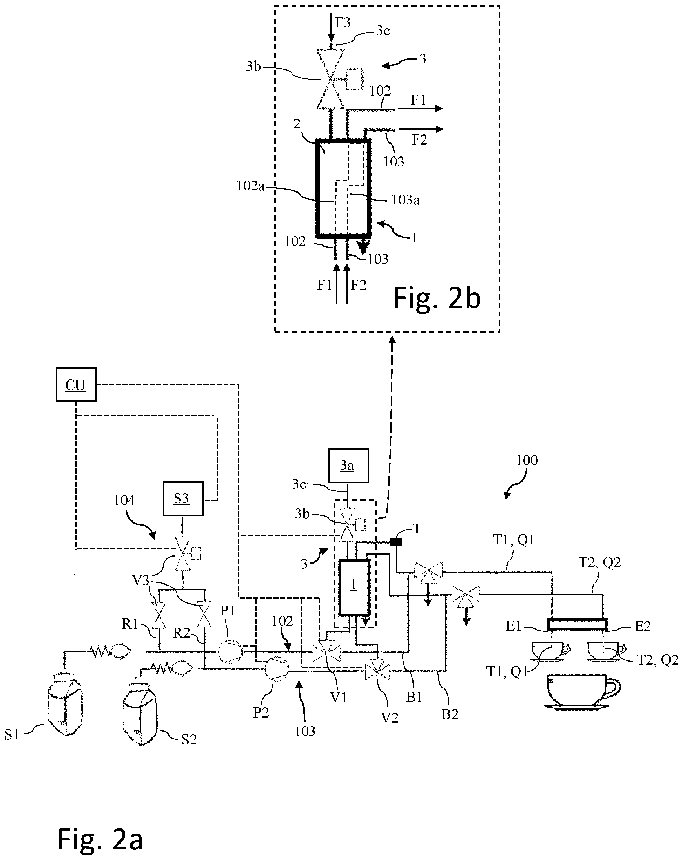

In the embodiments shown in figures 1a and 2a, the heating elements 3 comprise a steam generation unit 3a configured to supply water vapour into the heating chamber 2, for example, through the supply duct 3. In use, the water vapour flow condenses on what will hereinafter be defined as the first and second heating sections 102a, 103a of the first and second hydraulic lines 102, 103 to transfer heat to the first and second fluid flows F1, F2 respectively and bring them to the dispensing temperatures T1, T2 of the respective hot beverages. Thus, preferably the heating flow F3 comprises water vapour.

Still with reference to the embodiments shown in figures 1a and 2a, the heating elements 3 further comprise adjustable heat delivery valve means 3b adapted to vary the thermal power supplied to the heating chamber 2 by varying the flow rate of the heating flow F3. Said steam delivery valve means 101b comprise, for example, a proportional type solenoid valve configured to adjust the flow rate of the heating flow F3 or a solenoid valve driven by means of a succession of on/off commands according to a certain frequency.

Preferably, the steam generation unit 3a is placed in fluid communication with the heating chamber 2, in particular with the supply duct 30, by means of a steam supply line 3c on which, if present, the heat delivery valve means 3b are arranged.

The machine 100 also comprises first and second hydraulic lines 102, 103 configured to be placed in fluid communication respectively with first and second fluid sources S1, S2 and respectively provided with first and second dispensers E1, E2.

As shown in figures 1b and 2b, the first and second hydraulic lines 102, 103 respectively have a first and a second heating section 102a, 103a through the heating chamber 2.

It should be specified that the first and second heating sections 102a, 103a belong to two distinct hydraulic lines and, therefore, the flows flowing in them do not contaminate each other getting mixed up.

In use, if the dispensing of the first hot beverage is required, the first hydraulic line 102 is configured to convey the first fluid flow F1 from the first source S1 to the first dispenser E1, passing through the first heating section 102a. Similar to the first hydraulic line 102, if the dispensing of the second hot beverage is required, the second hydraulic line 103 is configured to convey the second fluid flow F2 from the second source S2 to the second dispenser E2, passing through the second heating section 103a.

In use, the thermal power supplied by the heating elements 3 in the heating chamber 2 is transferred partly to the first fluid flow F1 flowing in the first heating section 102a, and partly to the second fluid flow F2 flowing in the second heating section 103a. In particular, if the heating flow F3 comprises a flow of water vapour, the heating of the first and second flows F1, F2 flowing in the heating sections 102a, 103a takes place as a result of the condensation of the vapour on the latter and due to the subsequent transfer by conduction of heat to the fluids flowing therein.

According to one aspect, the first and second heating sections 102a, 103a are made of thermally conductive materials such as, for example, stainless steel.

In general, the choice of the construction materials of the first and second heating sections 102a, 103a depend on the fluids flowing therein and that must be heated. The selection of materials is carried out in such a way as to obtain the highest possible energy efficiency and guarantee a final product with a high organoleptic profile. In this regard, it should be noted that the choice of a material with a thermal conductivity that is too high for the fluid flowing in it could generate a smell of burning or caramel in the heated fluid or, in the case of frothed fluids, to have a low gloss and compact frothing.

Preferably, the first and second heating sections 102a, 103a are made of material characterized by a different thermal conductivity, so as to be optimized according to the fluids that, in use, flow therein.

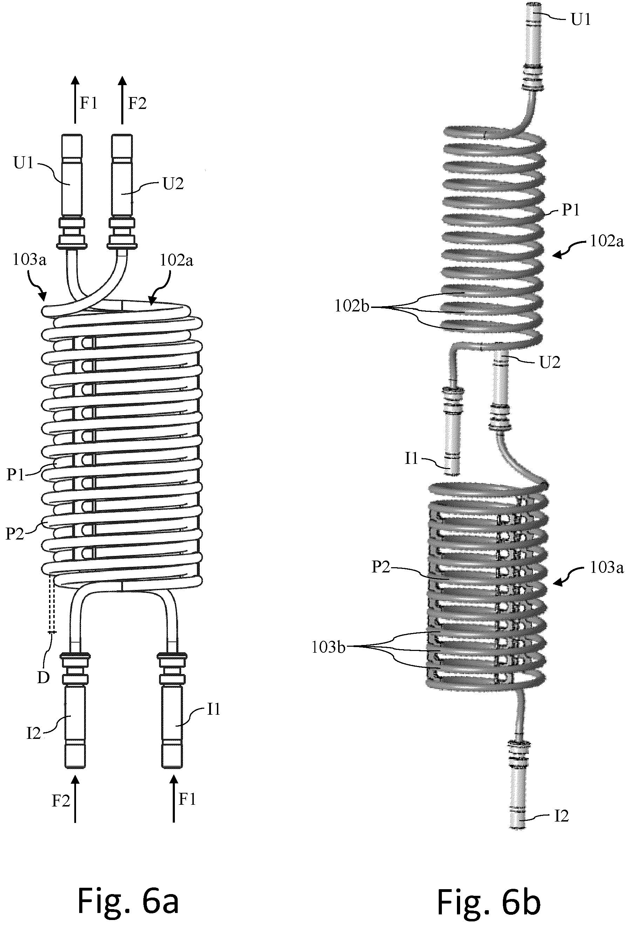

In the embodiment shown in figures 5a, 6a, and 6b, the first and second heating sections 102a, 103a extend along a respective helical path P1, P2 coaxially and around the supply duct 30. In doing so, the first and second heating sections 102a, 103a respectively make a plurality of first and second coils 102b, 103b surrounding the supply duct 30 which, in use, are hit by the heating flow F3 that leaves it radially through the supply openings 31.

If the heating flow F3 is a flow of water vapour, it is noted that the heat necessary for heating the first and second fluid flows F1, F2 is proportional to the amount of vapour condensed on the first and second coils 102b, 103b which depends on their positioning within the heating chamber 2, in particular both on their mutual arrangement and on their positioning with respect to the supply duct 30. The thermal efficiency of the heating device is therefore significantly influenced by the arrangement of the heating sections 102a, 103a of the first and second tubular circuits 4, 5 inside the heating chamber 2.

According to a preferred embodiment, in order to obtain heating devices with good thermal efficiencies, the first coils 102b are interposed between the second coils 103b and the supply duct 30 along a radial direction R-R directed radially to the axial direction A-A.

As shown in figures 5c and 6a, preferably, the second coils 103b are spaced from the first coils 102b along the radial direction R-R by a distance D comprised between 1mm and 2mm.

Through experimental tests, the Applicant verified that, by accommodating the first and second heating sections 102a, 103a in each other and keeping the respective coils 102b, 103b spaced at a distance comprised between 1-2 mm along the radial direction R-R, the condensation energy of the steam on the global system, composed of the first and second heating sections 102a, 103a, is equal to the sum of the condensation energies that would occur if the condensation of the steam took place in two identical heating chambers each equipped with a heating section. With such an arrangement that is, the first and second heating sections 102a, 103a do not thermally interfere with each other and, therefore, do not alter the efficiency of the heating device and facilitate its management.

With reference to the embodiment shown in figures 5c and 6a, it should be specified that the distance D is calculated taking as reference the outermost point of the first coils 102b and the innermost point of the second coils 103b. In other words, according to one aspect, the distance D is the distance between a first cylinder (imaginary, not shown in the figures) in which the first coils 102b are inscribed, and a second cylinder (imaginary, not shown in the figures) inscribed by the second coils 103b. Therefore, in the embodiment shown in figures 5c and 6a, the distance D is equal to the difference between the innermost radius of the second coils 103b and the outermost radius of the first coils 102b.

According to one aspect, the first and second coils 102b, 103b are alternated along the axial direction A-A so as to be substantially equally hit by the heating flow F3 and, preferably, are also spaced along the axial direction A-A so as not to thermally interfere by conduction.

In the embodiment shown in figure 5a and 5b, the heating device 1 comprises a spacer 6 mounted on the first and second coils 41, 51 and configured to keep them spaced in accordance with the above.

In particular, with reference to the embodiment shown in figures 6a and 6b, the first heating section 102a extends in the heating chamber 2 along a first helical path P1 from a first inlet I1, through which the first fluid flow F1 is supplied to the heating device 1, and a first outlet U1, through which the first fluid flow F1 leaves the heating device 1 after being heated therein; the second heating section 103a extends in the heating chamber 2 along a second helical path P2 from a second inlet I2, through which the second fluid flow F2 is supplied to the heating device 1, and a second outlet U2 through which the second fluid flow F2 leaves the heating device 1 after being heated therein.

It should be specified that the inlets I1, I2 and the outlets U1, U2 of the first and second heating sections 102a, 103a may have the arrangement shown in figures 6a and 6b or inverted. That is to say that the first and second fluid flows F1, F2 may pass through the first and second heating sections 102a, 103a both equicurrently and countercurrently. It should be noted that the expulsion of any condensate generated by the heating flow F3 into the heating chamber 2 preferably takes place by gravity independently of the organization of the inlets I1, I2 and the outlets U1, U2 of the first and second heating sections 102a, 103a and, therefore, independently of the reciprocal motion of the first and second fluid flows F1, F2.

The first hydraulic line 102 comprises a first pump P1 configured to generate the first fluid flow F1 direct from the first source S1 to the first dispenser E1, while the second hydraulic line 103 comprises a second pump P2 configured to generate the second fluid flow F2 directed from the second source S2 to the second dispenser E2.

In the embodiments shown in figures 1a and 2a, the first and second pumps P1, P2 are arranged on the respective hydraulic lines 102, 103 upstream of the heating device 1. That is, the first pump P1 is arranged on the first hydraulic line 102 upstream of the first inlet I1, the second pump P2 is arranged on the second hydraulic line 103 upstream of the second inlet I2.

The first source and the second source S1, S2 may be the same but are preferably different. For example, the first source S1 contains cow's milk to be supplied into the first hydraulic line 102 while the second source S2 contains a vegetable beverage to be supplied to the second hydraulic line 102.

According to one aspect, the first and second sources S1, S2 are two tanks adapted to contain a respective fluid. If the fluid requires to be stored at low temperatures, as in the case of cow's milk, the first and/or second sources S1, S2 may be cooled or generally configured to maintain the respective fluids at their optimal storage temperature.

If at least one of the two fluid flows F1, F2 is water, the respective source may also be the water mains.

The machine 100 also comprises an electronic control unit CU placed in signal communication with the heating elements 3, the first pump P1 and the second pump P2.

In particular, preferably, the electrode control unit CU is placed in signal communication with the heating elements to command the operation/shutdown of the steam generation unit 3a and/or to command the opening/closing/adjustment of the heat delivery valve means 3b. That is, the electronic control unit CU is configured to command and regulate the heating flow F3.

Furthermore, preferably, the electronic control unit CU is placed in signal communication to command the actuation/shutdown of the first and second pumps P1, P2.

In particular, according to one aspect, the electronic control unit CU is configured to adjust the operating regime (level/intensity/operating speed) of the first and/or second pump P1, P2 so as to be able to adjust the flow rate value of the first and/or second fluid flow F1, F2. That is to say, the first and/or the second pump P1, P2 are configured to impose different flow rate values on the first and the second fluid flow F1, F2 by modifying their operating regime which is controllable by means of a regulation signal generated by the control unit CU.

According to a still further aspect, the control unit CU comprises a memory (not shown in the figures) in which the mappings of the pumps correlating the delivered flow rate as a function of the desired temperature are saved. These mappings can be obtained experimentally by setting the target temperature to which the fluid flow passing through the heating device is to be brought and calculating the flow rate necessary to obtain the target temperature.

It should be noted that by modifying the flow rate values of the first and second fluid flows, the thermal jump caused by the fluid flows F1, F2 in the respective heating sections 102a, 103a can be modified.

According to one aspect, the machine 100 comprises at least one temperature sensor T arranged in the second hydraulic line 103 downstream of the heating device 1, in particular downstream of the second heating section 103a, even more precisely downstream of the second outlet U2. In use, the temperature sensor T is configured to generate a temperature signal representative of the temperature of the second fluid flow F1 downstream of the second heating section 103a and send it to the electronic control unit CU with which it is placed in signal communication. As more detailed below in relation to step D of the method, the temperature signal recorded by the temperature sensor T can be used to carry out a retroactive control aimed at obtaining a certain temperature of the second fluid flow F2 at the outlet of the heating device 1 by adjusting the flow rate value thereof, for example, by acting on the operating regime of the second pump P2.

In alternative embodiments, the machine 100 could also comprise further temperature sensors (not shown) arranged on each hydraulic line 102, 103 upstream and downstream of the heating device 1, in particular upstream and/or downstream of the first and second heating sections 103a, 103b.

In order to also be able to dispense cold or room temperature beverages, according to one aspect, the first and second hydraulic lines 102, 103 respectively have a first and a second bypass section B1, B2 that fluidically connect the respective pumps P1, P2 directly to the respective dispensers E1, E2, thus respectively bypassing the first and second heating section 102a, 103a.

Furthermore, again in order to allow the dispensing of even cold or room temperature beverages, preferably, the first and the second hydraulic line 102, 103 comprise respectively first and second valve means V1, V2 arranged downstream of the respective pump P1, P2 and upstream of the heating device 1. The first valve means V1 are configured to selectively feed the first flow F1 to the first heating section 102a or to the first bypass section B1, the second valve means V2 are instead configured to selectively feed the second flow F2 to the second heating section 103a or to the second bypass duct B2.

The first and second valve means V1, V2, if present, are placed in signal communication with the electronic control unit CU which is configured to command them to selectively divert the fluid flow F1, F2 on which they act in the respective bypass section B1, B2 or in the respective heating section 102a, 103a, depending on whether the dispensing of a hot or cold beverage is required.

Preferably, the first and second valve means V1, V2 have a rest position, in which they divert the respective fluid flows F1, F2 towards the respective heating sections 102a, 103a, and an actuated configuration, in which they divert the respective fluid flows F1, F2 towards the respective bypass sections B1, B2. Therefore, preferably, the valve means V1, V2 are implemented to divert the respective fluid flows F1, F2 in the respective bypass sections B1, B2 as by default they send such flows in the first and second heating sections 102a, 103a.

However, it should be noted that not necessarily both hydraulic lines 102, 103 have bypass ducts with their respective valve means, in fact, it could also be that only one of these is provided therewith. In such a case, only one of the hydraulic lines 102, 103 will be able to dispense both hot beverages and cold beverages.

In the embodiments shown in figures 1a and 2a, the machine 100 further comprises an air supply circuit 104 configured to be placed in fluid communication with a compressed air source S3 for supplying pressurized air in the first and second hydraulic lines 102, 103. The air supply circuit 104 is used to make the fluid flows two-phase (liquid/air) and, for example, is used to froth the milk.

According to one aspect, the air supply circuit 104 is provided with a first branch R1 connected to the first hydraulic line 102 upstream of the heating device 1, and a second branch R2 connected to the hydraulic line 103 upstream of the heating device 1. The first and second branches R1, R2 are respectively configured to supply pressurized air in the first and second hydraulic lines 102, 103.

Preferably, the first and second branches R1, R2 are connected to the first and second hydraulic lines 102, 103 upstream of the first and second pumps P1, P2, respectively.

According to a further aspect, the air supply circuit 104 is also provided with air delivery valve means V3 configured to selectively supply or not supply pressurized air from the compressed air source S3 to the first and/or second branch R1, R2.

The air delivery valve means V3, if present, are placed in signal communication with the electronic control unit CU which is configured to control them to selectively supply compressed air into the first and second branches R1, R2 and then into the first and second hydraulic lines 102, 103.

According to one aspect, the air supply valve means V3 are configured to control the flow rate of air supplied in the first and/or second branch R1, R2, and the electronic control unit CU is configured to generate a regulation signal of the air supply valve means V3 to regulate the flow rate of air supplied in the first and/or second branch R1/R2.

In particular, in the embodiment of figure 1a, the air delivery valve means V3 comprise a valve for each branch R1, R2 configured to individually adjust the flow of air supplied in the first and second hydraulic lines 102, 103.

In the embodiment of figure 2a, the air delivery valve means V3 comprise a single valve arranged upstream of the first and second branches configured to simultaneously adjust the flow of air supplied in the first and second hydraulic lines.

In the embodiment of figure 2a, the air delivery valve means V3 further comprise valves of the on/off type on each branch R1, R2.

The machine 100 can also comprise input/output devices (e.g. touchscreen display) placed in signal communication with the electronic control unit CU to, for example, select the hot beverage(s) to be dispensed, show the progress of the dispensing process, modify the dispensing parameters.

In accordance with the foregoing, the present invention also concerns a method for simultaneous dispensing of the first hot beverage at the first temperature T1 obtained by heating the first fluid flow F1, and the second hot beverage at the second temperature T2 obtained by heating the second fluid flow F2, by means of the machine 100 described above.

This method first provides for a step A) of controlling, by means of the electronic control unit CU, the operation of the heating elements 3 of the heating device 1 to provide a thermal power in the heating chamber 2 such as to bring the first fluid flow F1 through the first heating section 102a to the first temperature T1 with a first flow rate value Q1.

The thermal power supplied to the heating chamber 2 is therefore such as to raise the temperature of the first fluid flow F1 with the first flow rate value Q1 so that this is brought to the first temperature T1 (i.e. dispensing temperature of the first hot beverage) when it leaves the first heating section 102a and with this the heating chamber 2. Therefore, in use, the first fluid flow F1 having the first flow rate value Q1 passes through the heating chamber 2 in the first heating section 102a where, by absorbing part of the thermal power supplied into it, it is brought from a first initial temperature T1i (e.g. temperature at which it is stored in the first source S1) to the first dispensing temperature T1 of the first hot beverage at the first outlet U1.

According to one aspect, in step A), the electronic control unit CU controls the operation of the heating elements 3 so that they supply the heating flow F3, preferably comprising water vapour, into the heating chamber 2. The heating flow F3 entering the heating chamber 3 introduces therein the thermal power necessary to raise the temperature of the first fluid flow F1 having the first flow rate value Q1 to the first temperature T1 in the heating section 102a. For example, in step A), the method provides for controlling the operation of the steam generation unit 3a.

It should be specified that a skilled person in the sector - through known thermodynamic correlations or, possibly, through routine experimental activities - is able to independently determine the thermal power and the characteristics of the heating flow F3 to be supplied into the heating chamber 2 so that the first fluid flow F1 having the first flow rate value Q1 performs the thermal jump necessary to reach the first temperature T1 by passing through the heating chamber 2 in the heating section 102a.

If the heating elements 3 of the machine 100 comprise the heat delivery valve means 3b described above, step A) may comprise the sub-steps of:
A1) identifying the regulation of the heat delivery valve means 3b adapted to provide in the heating chamber 2 the thermal power necessary to bring the first fluid flow F1 to the first temperature T1 with the first flow rate value Q1 in the first heating section 102a;
A2) by means of the electronic control unit CU controlling the operation of the heating elements 3 to generate the heating flow F3;
A3) by means of the electronic control unit CU generating a regulation signal of the heat delivery valve means 3b adapted to impose the regulation identified in sub-step A1).

Sub-step A1) is performed upstream of sub-steps A2) and A3) which can instead be performed both simultaneously and in succession.

According to one aspect, the sub-step A1) is performed by exploiting a mapping of the thermal powers supplied in the heating chamber 2 as a function of the operating configuration of the heat delivery valve means 3b (e.g. opening degree of an electronically controllable proportional valve) saved in the memory of the electronic control unit CU. In this case, in use, once the thermal power value to be supplied into the heating chamber 2 has been determined, by accessing the aforesaid mapping of the thermal powers saved in memory, the electronic control unit identifies the regulation of the heat delivery valve means 3b which it then uses to generate the regulation signal of the sub-step A3).

Simultaneously or even after step A), the method provides a step B) of controlling by means of the electronic control unit CU the actuation of the first pump P1 so as to generate the first flow F1 having the first flow value Q1 in the first hydraulic line 102.

Step B) then provides for generating in the first hydraulic line 102 the first flow F1 directed from the first source S1 to the first dispenser E1 and having a flow rate value (first flow rate value Q1) which causes this, by passing through the heating chamber 2 in the first heating section 102a, to be brought to the first temperature T1 due to the thermal power supplied by the heating elements 3.

If the first pump P1 is configured to operate at different regimes to impose different flow rates, step B) may comprise the sub-steps of:
B1) identifying the operating regime of the first pump P1 associated with the first flow value Q1, for example, by accessing the mapping of the first pump saved in memory; and
B2) by means of the electronic control unit CU, generating an actuation signal of the first pump at the regime identified in sub-step B1.

Simultaneously with step B), the method provides a step C) of controlling by means of the electronic control unit CU the actuation of the second pump P2 to generate the second fluid flow F2 in the second hydraulic line 103.

The method also comprises a step D) of adjusting the flow rate of the second fluid flow F2 so that it assumes a second flow rate value Q2 such that the second fluid flow F2, by passing through the second heating section 103a and absorbing part of the thermal power supplied by the heating elements 3, is brought to the second temperature T2 (i.e. dispensing temperature of the second beverage).

In other words, the flow rate of the second fluid flow F2 is adjusted so that the latter, by passing through the heating chamber 2 in the second heating section 103a, makes a thermal jump that takes it from a second initial temperature T2i (e.g. storage temperature in the second source S2) to the second temperature T2 at the second outlet U2.

It should be specified that a skilled person in the sector - through known thermodynamic correlations or, possibly, through routine experimental activities - is able to independently determine the flow value Q2 of the second fluid flow F2 so that the latter makes the necessary thermal jump to reach the second temperature T2 by passing through the heating chamber 2 in the second heating section 103a.

According to one aspect, the second flow rate value Q2 is greater than or equal to the first flow rate value Q1.

In particular, according to a further aspect, the second flow rate value Q2 is equal to the first flow rate value Q1 when the first and second temperatures T1, T2 are the same and the fluid flows F1, F2 are made with the same fluid.

According to one embodiment, step D) comprises the sub-steps of:
D1) identifying the operating regime of the second pump P2 associated with the second flow value Q2 of the second fluid flow F2; and
D2) by means of the electronic control unit CU, generating a regulation signal of the second pump P2 adapted to impose the operating regime identified in sub-step D1).

According to an alternative embodiment, the second hydraulic line 103 comprises regulation valve means (not shown in the figures) - such as, for example, a proportional solenoid valve - arranged downstream of the second pump P2 and placed in signal communication with the electronic control unit CU. Such regulating valve means are configured to regulate the flow rate of the second fluid flow F2 by generating variable pressure drops, for example, by modifying the passage gap of the second fluid flow F2. In this embodiment, step D) of the method provides for generating by means of the electronic control unit CU a regulation signal of the regulation valve means for regulating the flow rate of the second fluid flow F2 so that it assumes the second flow rate value Q2.

If the machine comprises the aforesaid temperature sensor T arranged in the second hydraulic line 103 downstream of the heating device 1, in step D) the control unit CU can also adjust the flow rate of the second fluid flow F2 by performing a feedback control on the temperature signal generated by the temperature sensor T. That is to say that in step D the temperature of the second fluid flow F2 downstream of the heating device 1, in particular at the second outlet U2, is periodically monitored by the temperature sensor T and, if this deviates from the second temperature T2, the electronic control unit CU generates a correction signal - for example, of the operating regime of the second pump P2 - aimed at modifying the flow rate of the second fluid flow F2 so as to bring the temperature of the second fluid flow F2 downstream of the heating device 1 to the second temperature T2. Therefore, according to one aspect, the control unit CU is configured to periodically adjust the second flow rate value Q2 by performing a feedback control on the temperature signal generated by the temperature sensor T. By way of example, the feedback control implemented by the control unit CU may be of the proportional-integral (PI) or proportional-integral-derivative (PID) type.

It is therefore good to specify that the second fluid flow F2 can be fed into the second hydraulic line 103 already regulated (e.g. by operating the second pump P2 already at the correct operating regime so that the second fluid flow F2 is directly dispensed with the second flow rate value Q2) or be regulated in the flow rate during dispensing (e.g. regulation of the operating regime of the second pump P2 based on the temperature values detected by the temperature sensor T).

If the machine 100 is arranged to also dispense cold beverages in addition to the hot beverages and if the user has requested a cold beverage being dispensed - for example, by giving a command through the input/output devices -, upstream or at the same time as step B), the method comprises a step E) in which the electronic control unit CU commands the first valve means V1 and/or the second valve means V2 to divert the first fluid flow F1 in the first bypass section B1 and/or the second fluid flow F2 in the second bypass section B2 depending on which hydraulic line the dispensing of the cold beverage is required. For example, if the user requests hot milk being dispensed from the first hydraulic line 102 and cold tea from the second hydraulic line 103, the electronic control unit CU will act, if necessary, on the first valve means V1 to divert the first fluid flow F1 (milk) towards the first heating section 102a and will act on the second valve means V2 to divert the second fluid flow F2 (tea) towards the second bypass section B2.

If the machine 100 is arranged to dispense two-phase fluids, in particular liquid/air mixtures (e.g. frothed milk), at the same time as step B), the method comprises a step F) in which the electronic control unit CU commands the actuation of the air delivery valve means V3 so as to feed pressurized air into the first and/or second branch R1, R2 of the air supply circuit 104 depending on which hydraulic line is required to dispense the two-phase beverage.

If the dispensing of a single hot beverage is required, it is possible to halve the dispensing times by providing sources S1, S2 of the same fluid and performing the method described above. In doing so, the machine will simultaneously dispense two equal hot beverages having the same flow rate, thus halving the dispensing times.

Clearly, in order to satisfy contingent and specific needs, a person skilled in the art may make numerous modifications and variants to the configurations described above. Such modifications and variations are all also contained within the scope of protection of the invention, as defined by the following claims.

## Claims

1. Method for simultaneous dispensing of:
- a first hot beverage at a first temperature (T1) obtained by heating a first fluid flow (F1) and
- a second hot beverage at a second temperature (T2), equal to or less than the first temperature (T1), obtained by heating a second fluid flow (F2)
by means of a machine (100) for dispensing hot beverages comprising:
- a heating device (1) having a heating chamber (2) and heating elements (3) configured to provide heat in the heating chamber (2);
- a first hydraulic line (102) configured to be placed in fluid dynamic communication with a first fluid source (S1), having a first heating section (102a) passing through the heating chamber (2) of the heating device (1), and having a first dispensing nozzle (E1), said first hydraulic line (102) comprising a first pump (P1) configured to generate the first fluid flow (F1) directed from the first source (S1) to the first dispensing nozzle (E1);
- a second hydraulic line (103) configured to be placed in fluid dynamic communication with a second fluid source (S2), having a second heating section (103a) passing through the heating chamber (2) of the heating device (1), and having a second dispensing nozzle (E2), said second hydraulic line (103) comprising a second pump (P1) configured to generate the second fluid flow (F2) directed from the second source (S2) to the second dispensing nozzle (E2);
- an electronic control unit (CU) placed in signal communication with the heating elements (3), the first pump (P1) and the second pump (P2);
said method comprising the steps of:
A) controlling by means of the electronic control unit (CU) the operation of the heating elements (3) of the heating device (1) to provide a thermal power in the heating chamber (2) such as to bring the first fluid flow (F1) passing through the first heating section (102a) with a first flow rate value (Q1) to the first temperature (T1);
B) controlling by means of the electronic control unit (CU) the operation of the first pump (P1) to generate the first fluid flow (F1) having the first flow rate value (Q1) in the first hydraulic line (102),
C) at the same time as step B), controlling by means of the electronic control unit (CU) the operation of the second pump (P2) to generate the second fluid flow (F2) in the second hydraulic line (103),
D) adjusting the second fluid flow (F2) to assume a second flow rate value (Q2) such that the second fluid flow (F2) is brought to the second temperature (T2) by passing through the second heating section (103a).

2. Method according to claim 1, wherein:
- the second pump (P2) is configured to adjust the flow rate of the second fluid flow (F2) by changing its operating regime,
- step D) comprises the sub-steps of:
D1) identifying the operating regime of the second pump (P2) associated with the second flow rate value (Q2) of the second fluid flow (F2);
D2) by means of the electronic control unit (CU) generating a regulation signal of the second pump (P2) adapted to impose the operating regime identified in step D1).

3. Method according to any one of the preceding claims, wherein:
- the machine (100) comprises a temperature sensor (T) arranged in the second hydraulic line (103) downstream of the heating device (1) and configured to generate a temperature signal representative of the temperature of the second fluid flow (F2) downstream of the second heating section (103a), said control unit (CU) being placed in signal communication with the temperature sensor (T) to receive said temperature signal;
- in step D), the control unit (CU) regulates the flow rate of the second fluid flow (F2) by performing a feedback control on the temperature signal generated by the temperature sensor (T).

4. Method according to any one of the preceding claims, wherein:
- the heating elements (3) are configured to supply a heating flow (F3) inside the heating chamber (2) and comprise adjustable heat delivery valve means (3b) adapted to vary the thermal power supplied to the heating chamber (2) by varying the flow rate of the heating flow (F3);
- step A) comprises the sub-steps of:
A1) identifying the adjustment of the heat delivery valve means (3b) adapted to provide in the heating chamber (2) the thermal power necessary to bring the first fluid flow (F1) with the first flow rate value (Q1) to the first temperature (T1) in the first heating section (102a);
A2) by means of the electronic control unit (CU) controlling the operation of the heating elements (3) to generate the heating flow (F3);
A3) by means of the electronic control unit (CU) generating a regulation signal of the heat delivery valve means (3b) adapted to impose the regulation identified in step A1).

5. Method according to claim 4, wherein the heating elements (3) comprise a steam generation assembly (3a) and the heating flow (F3) comprises steam adapted to condense on the first heating section (102a) and on the second heating section (103a) to transfer heat respectively to the first fluid flow (F1) and to the second fluid flow (F2).

6. Method according to any one of the preceding claims, wherein:
- the first hydraulic line (102) has a first bypass section (B1) fluid dynamically connecting the first pump (P1) directly to the first dispensing nozzle (E1) bypassing the first heating section (102a), the first hydraulic line (102) comprising first valve means (V1) placed in signal communication with the electronic control unit (CU) and configured to selectively supply the first fluid flow (F1) to the first heating section (102a) or to the first bypass section (B1); and/or
- the second hydraulic line (103) has a second bypass section (B2) fluid dynamically connecting the second pump (P2) directly to the second dispensing nozzle (E2) bypassing the second heating section (103a), the second hydraulic line (103) comprising second valve means (V2) placed in signal communication with the electronic control unit (CU) and configured to selectively supply the second fluid flow (F2) to the second heating section (103a) or to the second bypass section (B2);
- if the dispensing of a cold or room temperature beverage is required from the first dispensing nozzle (E1) and/or second dispensing nozzle (E2), upstream of or simultaneously with step B), the method comprises a step E) wherein the electronic control unit (CU) commands the first valve means (V1) and/or the second valve means (V2) to divert the first fluid flow (F1) in the first bypass section (B1) and/or the second fluid flow (F2) in the second bypass section (B2).

7. Method according to any one of the preceding claims, wherein:
- the machine (100) comprises an air supply circuit (104) configured to be placed in fluid communication with a compressed air source (S3) and having:
- a first branch (R1) connected to the first hydraulic line (102) upstream of the heating device (1) and configured to supply pressurized air in the first hydraulic line (102);
- a second branch (R2) connected to the second hydraulic line (103) upstream of the heating device (1) and configured to supply pressurised air to the second hydraulic line (103);
- air supply valve means (V3) placed in signal communication with the electronic control unit (CU) and configured to selectively supply or not supply pressurized air from the compressed air source (S3) to the first branch (R1) and/or the second branch (R2);
- if the first and/or the second beverage are a liquid/air mixture, simultaneously with step B), the method comprises a step F) wherein the electronic control unit (CU) commands the actuation of the air delivery valve means (V3) so as to supply air under pressure in the first branch (R1) and/or in the second branch (R2) to make the first fluid flow (F1) and/or the second fluid flow (F2) biphasic.

8. Machine (100) for dispensing hot beverages, configured to simultaneously dispense at least two hot beverages at the same or different temperatures, said machine comprising:
- a heating device (1) provided with a heating chamber (2) and heating elements (3) configured to provide heat in the heating chamber (2), said heating elements (3) comprising:
- a steam generation unit (3a) configured to supply into the heating chamber (2) a heating flow (F3) comprising steam adapted to condense on the first heating section (102a) and on the second heating section (103a) to transfer heat respectively to the first fluid flow (F1) and to the second fluid flow (F2);
- adjustable heat delivery valve means (3b) adapted to vary the thermal power supplied to the heating chamber (2) by varying the flow rate of the heating flow (F3);
- a first hydraulic line (102) configured to be placed in fluid dynamic communication with a first fluid source (S1), having a first heating section (102a) passing through the heating chamber (2) of the heating device (1), and provided with a first dispensing nozzle (E1), said first hydraulic line (102) comprising a first pump (P1) configured to generate the first fluid flow (F1) directed from the first fluid source (S1) to the first dispensing nozzle (E1);
- a second hydraulic line (103) configured to be placed in fluid dynamic communication with a second fluid source (S2), having a second heating section (103a) passing through the heating chamber (2) of the heating device (1), and provided with a second dispensing nozzle (E2), said second hydraulic line (103) comprising a second pump (P2) configured to generate the second fluid flow (F2) directed from the second fluid source (S2) to the second dispensing nozzle (E2);
- an electronic control unit (CU) placed in signal communication with the heating elements (3), the first pump (P1) and the second pump (P2);

9. Machine (100) according to claim 8, wherein:
- the heating elements (3) comprise a supply duct (30) extending into the heating chamber (2);
- the first heating section (102a) and the second heating section (103a) extend along a respective helical path (P1, P2) coaxially and around the supply duct (30).
